(19) Europäisches Patentamt
European Patent Office
Office européen des brevets

(11) Veröffentlichungsnummer: **0 012 354**
**B1**

(12) # EUROPÄISCHE PATENTSCHRIFT

(45) Veröffentlichungstag der Patentschrift: **14.10.81**

(51) Int. Cl.³: **C 09 B 31/04**, C 09 B 31/02, C 09 B 31/14, C 10 L 1/22, C 10 M 1/32

(21) Anmeldenummer: **79104942.2**

(22) Anmeldetag: **05.12.79**

(54) **Disazofarbstoffe, Verfahren zur Herstellung von Zweier- oder Dreiergemischen von Disazofarbstoffen sowie Verfahren zum Färben und/oder Kennzeichnen von organischen Materialien.**

(30) Priorität: **11.12.78 DE 2853479**

(43) Veröffentlichungstag der Anmeldung: **25.06.80 Patentblatt 80/13**

(45) Bekanntmachung des Hinweises auf die Patenterteilung: **14.10.81 Patentblatt 81/41**

(84) Benannte Vertragsstaaten: **BE CH DE FR GB IT NL**

(56) Entgegenhaltungen:
**1. FR-A-2 090 133**
**2. FR-A-2 399 464**

(73) Patentinhaber: **BAYER AG, Zentralbereich Patente, Marken und Lizenzen, D-5090 Leverkusen 1, Bayerwerk (DE)**

(72) Erfinder: **Berger-Lohr, Bernd, Dr., Heymannstrasse 63, D-5090 Leverkusen (DE)**
Erfinder: **Leverenz, Klaus, Dr., Heymannstrasse 44, D-5090 Leverkusen (DE)**
Erfinder: **Meier, Helmut, Dr., Am Wasserturm 8, D-5090 Leverkusen 3 (DE)**

**EP 0 012 354 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Disazofarbstoffe, Verfahren zur Herstellung von Zweier- oder Dreiergemischen von Disazofarbstoffen sowie Verfahren zum Färben und/oder Kennzeichnen von organischen Materialien

Die Erfindung betrifft Disazofarbstoffe der Formel

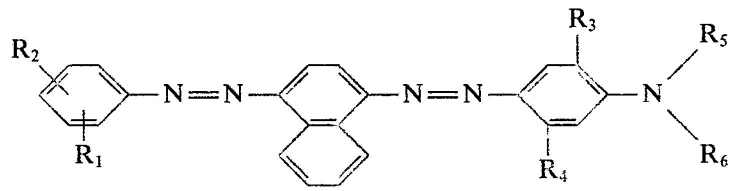

(I)

in der

$R_1$ und $R_2$ für Wasserstoff, Alkyl, Alkenyl, Aryl, Aralkyl, Alkoxy, Cycloalkyl,
$R_3$ für Wasserstoff, Alkyl, Alkoxy,
$R_4$ für Wasserstoff, Alkyl, Alkoxy, Acylamino, Alkylaminocarbonylaminc, Alkoxycarbonylamino,
$R_5$ für Alkoxyalkyl, Alkyl, Alkenyl, Cycloalkyl, Acyloxyalkyl, Aralkyl, Alkoxycarbonyloxyalkyl, Alkylaminocarbonyloxyalkyl und
$R_6$ für $C_3-C_{18}$-Alkyl, Alkenyl, Alkoxyalkyl, Acyloxyalkyl, Cycloalkyl, Aralkyl, Alkoxycarbonyloxyalkyl, Alkylaminocarbonyloxyalkyl stehen und
$R_3$, $R_5$ zusammen einen divalenten Rest der Formeln

$$-\overset{*}{C}H_2-CH_2-O-$$

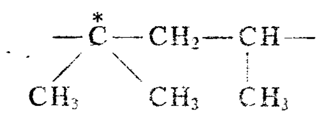

,

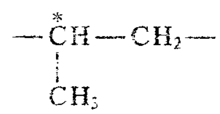

oder

$$-CH_2-CH_2-CH_2$$

bilden können, in dem das mit * bezeichnete C-Atom an das N-Atom gebunden ist, und

$R_5$, $R_6$ weiterhin unter Einschluß des N-Atoms, an das sie gebunden sind, einen gesättigten Heterocyclus, der weitere Heteroatome enthalten kann, bilden können.

$R_1$, $R_2$, $R_3$, $R_4$ und $R_5$ in der Bedeutung von Alkyl stehen bevorzugt für $C_1-C_{18}$-Alkyl
$R_1$, $R_2$, $R_5$ und $R_6$ in der Bedeutung von Alkenyl stehen bevorzugt für $C_2-C_{18}$-Alkenyl.
$R_1$ und $R_2$ in der Bedeutung von Aryl stehen bevorzugt für Phenyl oder Naphthyl.
$R_1$, $R_2$, $R_5$ und $R_6$ in der Bedeutung von Aralkyl stehen bevorzugt für Phenyl-$C_1-C_4$-alkyl oder Naphthyl-$C_1-C_4$-alkyl
$R_1$, $R_2$ und $R_3$ in der Bedeutung von Alkoxy stehen, bevorzugt für $C_1-C_4$-Alkoxy.
$R_1$, $R_2$, $R_5$ und $R_6$ in der Bedeutung von Cycloalkyl stehen bevorzugt für Cycloalkyl mit 3–10 C-Atomen.
$R_4$ in der Bedeutung von Acylamino steht bevorzugt für durch $C_1-C_{18}$-Alkylcarbonylgruppen substituiertes Amino, durch $C_1-C_{18}$-Alkylcarbonyl und $C_1-C_{18}$-Alkyl substituiertes Amino, einen Rest

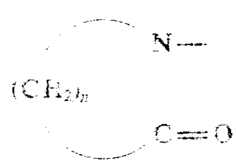

wobei n 3 oder 4 bedeutet oder einen Rest

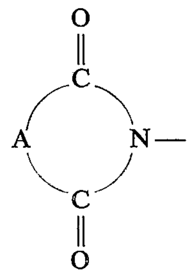

wobei A für

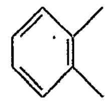

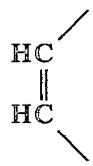 oder 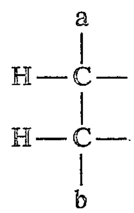

steht und a, b Wasserstoff oder $C_1-C_6$-Alkyl bezeichnen.

$R_5$ und $R_6$ in der Bedeutung Alkoxyalkyl stehen bevorzugt für $C_1-C_{18}$-Alkoxy-$C_1-C_{18}$-alkyl-Reste,

$R_5$ und $R_6$ in der Bedeutung von Aryloxyalkyl stehen bevorzugt für $C_1-C_{18}$-Alkylcarbonyloxy-$C_1-C_{18}$-alkyl-Reste.

$R_5$ und $R_6$ in der Bedeutung von Alkoxycarbonyloxyalkyl stehen bevorzugt für $C_1-C_{18}$-Alkoxycarbonyloxy-$C_1-C_{18}$-alkyl-Reste.

$R_5$ und $R_6$ in der Bedeutung von Alkylaminocarbonyloxyalkyl stehen bevorzugt für $C_1-C_{18}$-Alkylaminocarbonyloxy-$C_1-C_{18}$-alkyl-, besonders bevorzugt für $C_1-C_{18}$-Alkylaminocarbonyloxy-$CH_2-CH_2$-Reste.

$R_4$ in der Bedeutung von Alkylaminocarbonylamino steht bevorzugt für $C_1-C_{18}$-Alkylaminocarbonylamino. In der Bedeutung von Alkoxycarbonylamino steht $R_4$ bevorzugt für $C_1-C_{18}$-Alkoxycarbonylamino.

Für den Fall, daß $R_5$ und $R_6$ unter Einschluß des N-Atoms, an das sie gebunden sind, einen gesättigten Heterocyclus bilden, handelt es sich bevorzugt um das Morpholin-, Piperidin-, Pyrrolidin- oder Piperazin-System.

Für die erfindungsgemäßen Farbstoffe der Formel (I) sind als Reste $R_1$ und $R_2$ beispielsweise zu nennen:

Wasserstoff, Methyl, Ethyl, n- und iso-Propyl, n-, iso- und tert.-Butyl, Cyclohexyl, geradkettiges oder verzweigtes Dodecyl, Methoxy oder Ethoxy, Wasserstoff, Methyl oder Cyclohexyl sind besonders bevorzugt.

Beispiele für $R_3$ sind:

Wasserstoff, Methyl, Methoxy, Ethoxy, Propoxy oder Butoxy. Von diesen sind Wasserstoff und Methoxy besonders bevorzugt.

Als Beispiele für $R_4$ sind zu nennen:

Wasserstoff, Methyl, Methoxy oder Ethoxy, wobei Wasserstoff und Methyl besonders bevorzugt sind.

Geeignete Reste $R_5$ sind beispielsweise:

$CH_3$ $\quad -C_2H_5$ $\quad C_3H_7$ $\quad -CH_2-CH_2-CH_2-CH_3$ $\quad -CH_2-CH_2-\underset{\displaystyle CH_3}{\underset{|}{CH}}-CH_3$

$-CH_2-CH(C_2H_5)-(CH_2)_3-CH_3$ $-CH_2-(CH_2)_7-CH_3$ $-C_{10}H_{21}$ $-C_{13}H_{27}$

$-C_{14}H_{29}$ $-C_{18}H_{37}$ $-CH_2-CH_2-OCH_3$ $-CH_2-CH_2-CH_2-OCH_3$

$-(CH_2)_3-OC_2H_5$ $-(CH_2)_3-OC_4H_9$ $-(CH_2)_3-O-CH(C_2H_5)-(CH_2)_3-CH_3$

$-(CH_2)_3-O-CH_2-CH(C_2H_5)-(CH_2)_3-CH_3$ und $-(CH_2)_3-OC_{18}H_{37}$

$-CH_2-$ 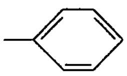 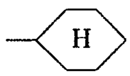 $-CH_2-CH{=}CH_2$ $-CH_2-CH_2-O-C(=O)-CH_3$

$-CH_2-CH_2-O-C(=O)-[C_2-C_{18}-\text{Alkyl}]$

Geeignete Reste $R_6$ sind beispielsweise:

$-CH_2-CH_2-CH_3$ $-CH(CH_3)_2$ $-CH_2-CH_2-CH_2-CH_3$ $-CH_2-CH_2-CH(CH_3)-CH_3$

$-CH_2-CH(C_2H_5)-(CH_2)_3-CH_3$ $-CH_2-(CH_2)_7-CH_3$ $-C_{10}H_{21}$ $-C_{13}H_{27}$

$-C_{14}H_{29}$ $-C_{18}H_{37}$ $-CH_2-CH_2-OCH_3$ $-CH_2-CH_2-CH_2-OCH_3$

$-(CH_2)_3-OC_2H_5$ $-(CH_2)_3-OC_4H_9$ $-(CH_2)_3-O-CH(C_2H_5)-(CH_2)_3-CH_3$

$-(CH_2)_3-O-CH_2-CH(C_2H_5)-(CH_2)_3-CH_3$ und $-(CH_2)_3-OC_{18}H_{37}$

Im Rahmen der vorliegenden Erfindung sind folgende Farbstoffe von besonderem Interesse:

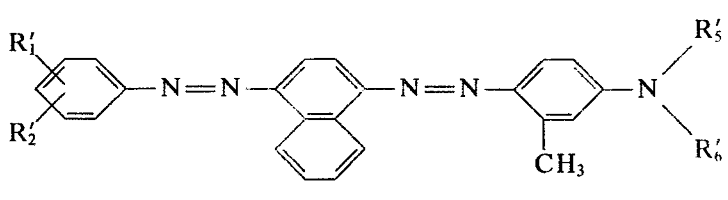 (II)

In der Formel (II) bedeuten:

$R_1'$, $R_2'$ Wasserstoff, Methyl, Cyclohexyl, tert.-Butyl,
$R_5'$ Ethyl, Propyl, Butyl und
$R_6'$ Butyl.

Ganz besonders bevorzugt bedeuten $R_1'$ und/oder $R_2'$ in der Formel II bzw. $R_1$ und/oder $R_2$ in der Formel (I) Wasserstoff.

Die Erfindung betrifft weiterhin ein Verfahren zum Färben und/oder Kennzeichnen von organischen

Materialien, insbesondere Mineralölprodukte, organische Lösungsmittel und halbfeste organischen Substanzen, das dadurch gekennzeichnet ist, daß man eine Verbindung der Formel

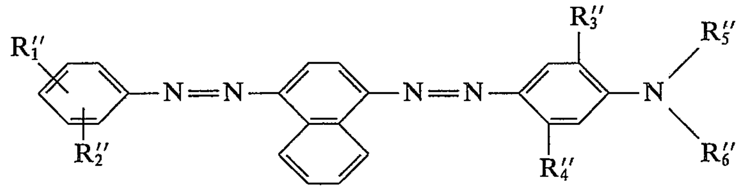

(III)

verwendet.

In der Formel (III) bedeuten:

| | |
|---|---|
| $R_1''$, $R_2''$ | Wasserstoff, Alkyl, Alkenyl, Aryl, Aralkyl, Alkoxy, Cycloalkyl, |
| $R_3''$ | Wasserstoff, Alkyl, Alkoxy, |
| $R_4''$ | Wasserstoff, Alkyl, Alkoxy, Acylamino, Alkylaminocarbonylamino, Alkoxycarbonylamino und |
| $R_5''$, $R_6''$ | Wasserstoff, Alkyl, Alkenyl, Cycloalkyl, Aralkyl, Alkoxyalkyl, Acyloxyalkyl. |

Des weiteren können $R_3''$, $R_5''$ zusammen einen divalenten Rest der Formel

$$-\overset{*}{C}H_2-CH_2-O-$$

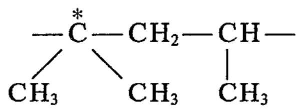

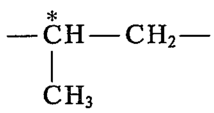

oder

$$-CH_2-CH_2-CH_2$$

bilden, in dem das mit * bezeichnete C-Atom an das N-Atom gebunden ist und

$R_5''$, $R_6''$ weiterhin unter Einschluß des N-Atoms, an das sie gebunden sind, einen gesättigten Heterocyclus, der weitere Heteroatome enthalten kann, bilden.

$R_1''$, $R_2''$, $R_3''$, $R_4''$, $R_5''$ und $R_6''$ haben neben Wasserstoff bevorzugt die vorstehend für $R_1$, $R_2$, $R_3$, $R_4$, $R_5$ oder $R_6$ angegebenen Bedeutungen. Daneben bezeichnet $R_6''$ in der Bedeutung von Alkyl bevorzugt $C_1-C_{18}$-Alkyl.

Beim erfindungsgemäßen Verfahren zum Färben und/oder Kennzeichnen von organischen Materialien verdienen die Farbstoffe der Formel

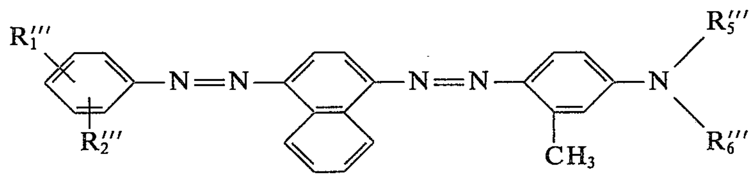

(IV)

in der

| | |
|---|---|
| $R_1'''$, $R_2'''$ | Wasserstoff, Methyl, Cyclohexyl, tert.-Butyl, |
| $R_5'''$ | Methyl, Ethyl, Propyl, Butyl und |
| $R_6'''$ | Methyl, Ethyl, Propyl, Butyl |

bezeichnen, besonderes Interesse.

Ganz besonders bevorzugt werden solche Farbstoffe gemäß den Formeln (III) oder (IV) eingesetzt, bei denen $R_1'''$ und/oder $R_2'''$ bzw. $R_1''$ und/oder $R_2''$ Wasserstoff bedeuten.

Des weiteren sei erwähnt, daß sich insbesondere zum Färben und/oder Kennzeichnen von Mineralölprodukten auch Mischungen von Farbstoffen gemäß Formel (III), insbesondere Mischungen von zwei oder drei Farbstoffen besonders bewährt haben.

Hervorzuheben sind Gemische von zwei oder drei Farbstoffen der Formel (IV), wie z. B. Gemische der folgenden Farbstoffe:

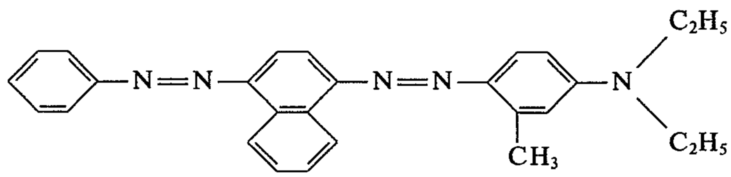

(V)

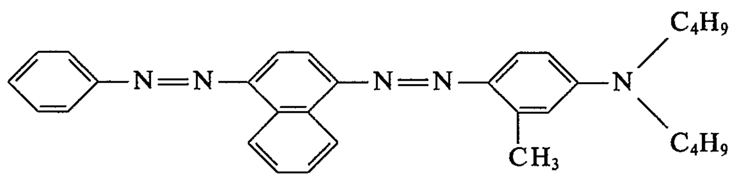

(VI)

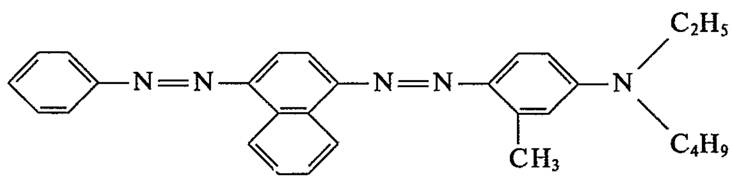

(VII)

Die zum Färben und/oder Kennzeichnen von Mineralölprodukten verwendeten Farbstoffgemische haben bevorzugt folgende Zusammensetzungen:

| Farbstoff der Formel | V | VI [Gew.-%] | VII |
|---|---|---|---|
| Zweiergemisch | 40–90 | 60–10 | – |
| Zweiergemisch | 60–90 | 40–10 | – |
| Dreiergemisch | 50–90 | 25– 5 | 25– 5 |
| Dreiergemisch | 60–80 | 20–10 | 20–10 |

Die Farbstoffe der Formel (III) sind bei Raumtemperatur rote Öle, wachsähnliche Substanzen oder Pulver. Sie eignen sich zum Färben und/oder Kennzeichnen von organischen Materialien insbesondere Mineralölprodukte, organische Lösungsmittel und halbfeste organische Substanzen.

Insbesondere eignen sich die Verbindungen der Formel (III) bzw. deren Gemische zum Färben und/oder Kennzeichnen von Vergasertreibstoffen und Heizölen.

Aus technischen Gründen werden die Farbstoffe zur Kennzeichnung von Mineralölprodukten in Form von Lösungen in aromatischen Kohlenwasserstoffen oder Cyclohexanon eingesetzt.

Solche Lösungen enthalten bevorzugt 1 – 50 Gew.-%, ganz besonders bevorzugt 5 – 30 Gew.-% Farbstoff bzw. Farbstoffgemisch und können auch in Mischung mit Furfurol zur Kennzeichnung von Heizöl verwendet werden. Als aromatische Kohlenwasserstoffe eignen sich insbesondere Alkylbenzole, Naphthalin und Alkylnaphthaline mit $C_1 - C_4$-Alkylgruppen. Im einzelnen seien beispielsweise Toluol, Xylole, Äthylbenzol, Isopropylbenzol, Mesitylen, Diphenyl, Naphthalin, Methylnaphthaline und Isopropylnaphthaline und insbesondere Mischungen dieser Aromaten genannt.

Die so bereiteten Farbstofflösungen können beispielsweise in einer Verdünnung von 1 : 25 000 zur Kennzeichnung von Heizöl dienen.

An Farbstoff konzentrierte Lösungen in Kohlenwasserstoffen, z. B. Toluol, Xylol, hochsiedende Aromatengemische, Benzin, Kerosin, Paraffinöle oder in Cyclohexanon sind im Temperaturbereich von –20°C in der Regel unbeschränkte Zeit lagerstabil, d. h. es treten keine Ausflockungen oder Auskristallisationen auf.

Die Herstellung der Farbstoffe der Formel (I) und somit auch die unter diese Formel fallenden

Farbstoffe der Formel (III) kann in der Weise erfolgen, daß man diazotierte Aniline der allgemeinen Formel (VIII)

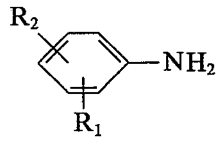

(VIII)

mit α-Naphthylamin kuppelt, den entstehenden Monoazofarbstoff erneut diazotiert und auf Komponenten der allgemeinen Formel (IX) kuppelt,

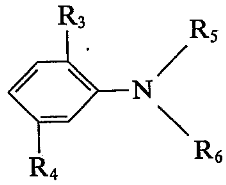

(IX)

Man kann die Diazotierung der Aniline der allgemeinen Formel (VIII) in einem wäßrigen oder in einem organischen Medium durchführen, beispielsweise in Eisessig, Alkohol, Dioxan, Tetrahydrofuran, Formamid, Dimethylformamid oder Dimethylsulfoxid, wobei je nach verwendetem Medium beispielsweise mit Natriumnitrit, Alkylnitrit oder Nitrosylschwefelsäure unter Zusatz von Säuren diazotiert wird, und die so erhaltene Lösung der Diazoniumverbindung mit der Kupplungskomponente α-Naphthylamin bei einem pH-Wert von 3–7, vorzugsweise 4–6, vereinigen.

Der so erhaltene Monoazofarbstoff kann entweder direkt im ursprünglichen Kupplungsmedium weiter diazotiert und auf die Kupplungskomponenten der allgemeinen Formel (IX) gekuppelt werden oder er wird vorher isoliert. Nach der Isolierung kann man ihn trocknen und in dieser Form weiterdiazotieren und auf die Verbindungen der allgemeinen Formel (IX) kuppeln. Ebensogut kann man ihn aber auch in Form seines feuchten Preßkuchens weiter einsetzen.

Die Diazotierung und Kupplung im zweiten Schritt erfolgt in der gleichen Weise wie oben ausgeführt. Sie kann entweder im wäßrigen Medium, eventuell unter Zugabe eines Dispergiermittels, oder in einem geeigneten organischen Lösungsmittel erfolgen, wobei im Anschluß an die Diazotierung gegebenenfalls eine Klärung erfolgt.

Bei der zweiten Kupplung kann die Kupplungskomponente der allgemeinen Formel (IX) in einem höhersiedenden aromatischen Kohlenwasserstoff, wie Toluol oder Xylol, oder in einem im wesentlichen Naphthalinkohlenwasserstoffe Di- und Polyphenyle sowie höher kondensierte aromatische Ringsysteme enthaltenden Aromatengemisch gelöst werden, da man auf diese Weise ohne Isolierung der reinen Farbstoffe unmittelbar eine gebrauchsfertige Farbstofflösung herstellen kann.

Man kann aber auch die Farbstoffe der allgemeinen Formel (III) in an sich bekannter Weise zunächst herstellen und dann mit den oben beschriebenen Lösungsmitteln extrahieren oder nach Isolierung in einem der genannten Lösungsmittel auflösen.

Die zweite Kupplung wird im allgemeinen im Temperaturbereich von 0–50, vorzugsweise bei 10–20° C, durchgeführt.

Als Ergebnis der zweiten Kupplungsreaktion in Gegenwart der oben beschriebenen aromatischen Lösungsmittel erhält man die Verbindungen der Formel (III) in gelöster Form.

Die den Farbstoff enthaltende organische Phase kann man von der wäßrigen Phase abtrennen und erhält so eine konzentrierte Farbstofflösung, welche in dieser Form unmittelbar zum Anfärben von z. B. Mineralölprodukten geeignet ist. Die jeweils gewünschte Konzentration an Farbstoff in der Lösung kann bereits durch entsprechende Dosierung der Ausgangsstoffe leicht eingestellt werden. Den reinen Farbstoff erhält man aus der Lösung z. B. durch Abdestillieren des Lösungsmittels in an sich bekannter Weise. Es können sowohl einheitliche Farbstoffe als auch Farbstoffmischungen durch Einsatz mehrerer Reaktionskomponenten im Gemisch hergestellt werden.

Die Farbstofflösungen können nach Bedarf beliebig verdünnt werden. Sie sind im Unterschied zu den reinen Farbstoffen oder festen anderen Farbstoffen besonders leicht dosierbar.

Eine besonders vorteilhafte Herstellungsweise für die oben beschriebenen Gemische von Farbstoffen der Formeln (V), (VI) und (VII) besteht darin, daß man in der oben beschriebenen Weise Anilin auf α-Naphthylamin kuppelt und dann im zweiten Kupplungsschritt auf ein Gemisch der Kupplungskomponenten

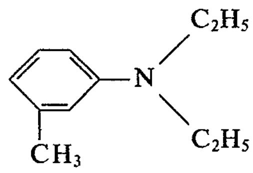

und/oder

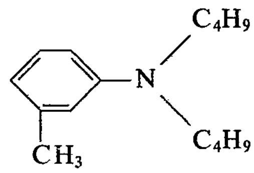

und/oder

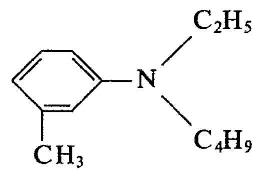

kuppelt und den entstehenden Farbstoff absaugt und trocknet.

Es muß als überraschend bezeichnet werden, daß die entstehenden Farbstoffgemische, insbesondere solche, die 40 – 90 Gew.-% des Farbstoffs der Formel (V) und 60 – 10 Gew.-% des Farbstoffs der Formel (VI) oder 50 – 90 Gew.-% des Farbstoffs der Formel (V), 25 – 5 Gew.-% des Farbstoffs der Formel (VI) und 25 – 5 Gew.-% des Farbstoffs der Formel (VII) enthalten, in fester Form erhalten werden.

Beispiel 1

13,4 Vol.-Teile Anilin werden in 57,5 Vol.-Teilen Wasser und 35,6 Vol.-Teilen Salzsäure (19,5 Bé) gelöst. Nach dem Abkühlen mit Eis auf 0° C wird mit 34 Vol.-Teilen 30vol.-%iger Natriumnitrit-Lösung bei 0 – 3° C diazotiert. Man zerstört noch vorhandenen Nitritüberschuß mit Amidosulfonsäure.

20,8 Gew.-Teile α-Naphthylamin werden in 300 Vol.-Teilen Wasser und 16 Vol.-Teilen Salzsäure (19,5° Bé) auf 80° C bis zu völligen Lösung erhitzt. Anschließend kühlt man durch Zugabe von Eis auf 0° C und gibt 250 Vol.-Teile Natriumacetatlösung (20vol.-%ig) hinzu.

Man läßt nun die diazotierte Anilinlösung zu dieser α-Naphthylaminsuspension bei 0 – 5 C langsam zulaufen.

Die erhaltene Suspension wird mit 65 Vol.-Teilen Salzsäure (19,5 Bé) angesäuert, mit Eis auf 3 C gebracht und mit 45 ml 30vol.-%iger Natriumnitritlösung diazotiert, wobei die Temperatur 5° C nicht übersteigen soll. Die Diazotierung dauert etwa 1 Stunde und der Farbstoff geht dabei in Lösung. Nach Beendigung der Diazotierung werden 6,5 Gew.-Teile Kieselgur zugesetzt, überschüssiges Nitrit mit Amidosulfonsäure zerstört und geklärt. Die so erhaltene Diazolösung gibt man zu er Emulsion von 24,91 Gew.-Teilen N-Ethyl-N-butyl-m-toluidin in 0,9 Gew.-Teilen eines Emulgators, bestehend aus einer Mischung von Na-Laurylsulfat und mehrfach oxethyliertem Nonylphenol, 15 Vol.-Teilen Wasser und 16 Vol.-Teilen Salzsäure (19,5° Bé). Anschließend wird mit Sodalösung (20vol.-%ig) bei 10 – 15 C innerhalb von 1 bis 1½ Stunden der pH-Wert der Lösung auf 4 gestellt, wobei der Farbstoff ausfällt. Man rührt noch 2 – 3 Stunden bei 20° C, hält den pH-Wert mit Sodalösung (20vol.-%ig) bei 4, saugt dann ab und wäscht mit Wasser neutral. Der ausgefallene Farbstoff wird bei 40 – 50 C im Vakuumschrank getrocknet. Man erhält 54 Gew.-Teile des Farbstoffs der Formel

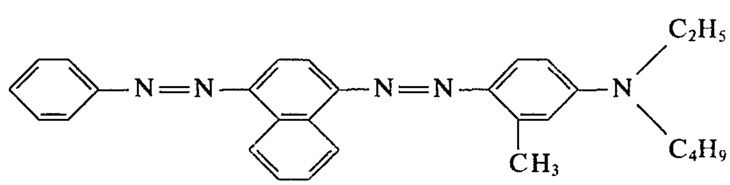

Der erhaltene Diazofarbstoff zeigt eine gute Löslichkeit und eine kräftige blaustichig rote Färbung in aromatischen Kohlenwasserstoffen.

Beispiel 2

Analog zu Beispiel 1 werden 13,4 Vol.-Teile Anilin diazotiert und auf 20,8 Gew.-Teilen α-Naphthylamin gekuppelt und der entstandene Monoazofarbstoff erneut diazotiert und geklärt. Die so erhaltene Diazolösung gibt man zu der Emulsion von 28,56 Gew.-Teilen N,N-Dibutyl-m-toluidin in 0,9 Gew.-Teilen eines Emulgators (s. o.), 15 Vol.-Teilen Wasser und 16 Vol.-Teilen Salzsäure (19,5 Bé). Anschließend wird mit Sodalösung (20vol.-%ig) bei 10 – 15° C innerhalb von 1 – 1½ Stunden der pH-Wert der Lösung auf 4 gestellt und der ausgefallene Farbstoff mit 300 Vol.-Teilen Xylol extrahiert. Man trennt die wäßrige Phase ab, wäscht die organische Phase mit Wasser neutral und erhält aus der organischen Farbstofflösung nach Abdestillieren des Xylols 60 Gew.-Teile des Farbstoffs der Formel

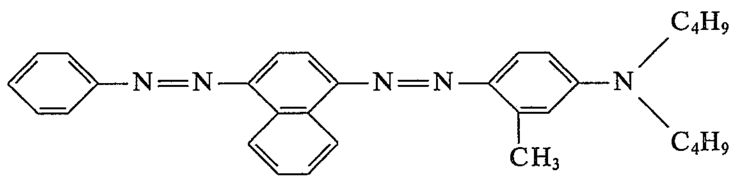

zunächst als rotes Öl, das nach längerem Stehen bei 0° C kristallisiert. Der Farbstoff eignet sich sehr gut zum Färben von Treibstoffen, Heizölen, Lacken und Wachsen in blaustichig roten Farbtönen.

Beispiel 3

Analog zu Beispiel 1 werden 13,4 Vol.-Teile Anilin diazotiert, auf 20,8 Gew.-Teile α-Naphthylamin gekuppelt und der entstandene Monoazofarbstoff erneut diazotiert und geklärt. Die so erhaltene Diazolösung gibt man zu der Emulsion von 14,94 Gew.-Teilen N-Ethyl-N-butyl-m-toluidin und 11,42 Gew.-Teilen N,N-Dibutyl-m-toluidin in 0,9 Gew.-Teilen eines Emulgators (s. o.), 15 Vol.-Teilen Wasser und 16 Vol.-Teilen Salzsäure (19,5 Bé). Anschließend wird mit Sodalösung (20vol.-%ig) bei 10 – 15° C innerhalb von 1 – 2 Stunden der pH-Wert der Lösung auf 4 gestellt und das entstandene Farbstoffgemisch mit 300 Vol.-Teilen Xylol ausgerührt. Man erhält aus der Farbstofflösung nach Abdestillieren des Xylols 58 Gew.-Teile eines roten öligen Gemisches der Farbstoffe der Formeln

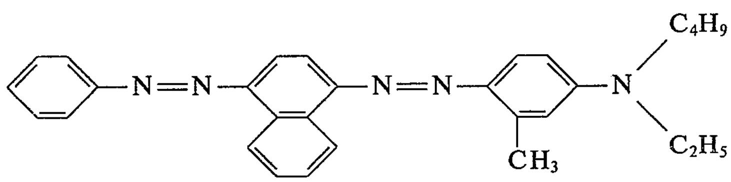

und

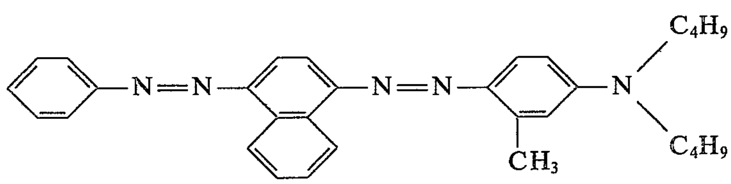

das sich in aromatischen und aliphatischen Kohlenwasserstoffen gut löst. Solche Lösungen sind bei Temperaturen von – 20° C unbeschränkt lagerstabil und gebrauchsfertig als Mittel zur Kennzeichnung von Mineralölprodukten in blaustichig roten Farbtönen.

Beispiel 4

13,4 Vol.-Teile Anilin und 20,8 Gew.-Teile α-Naphthylamin werden mit 32,2 Gew.-Teilen N-Ethyl-N-(2-ethylhexyl)-m-toluidin analog Beispiel 2 zu dem Farbstoff der Formel

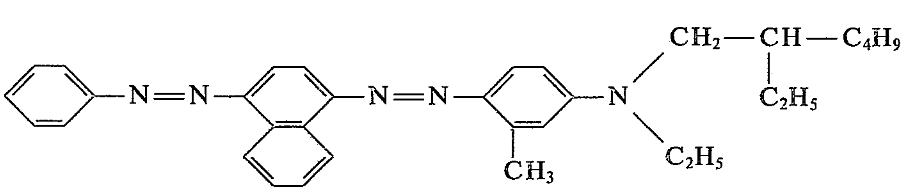

umgesetzt. Man erhält 63 Gew.-Teile des Farbstoffs in Form einer roten öligen Flüssigkeit mit sehr guten Lösungseigenschaften in aromatischen und aliphatischen Kohlenwasserstoffen.

Beispiel 5

53,5 Gew.-Teile m-Toluidin werden in 500 Vol.-Teilen Isopropanol und 225 Vol.-Teilen 5 n-Salzsäure gelöst. Nach dem Abkühlen mit Eis auf 0° C wird mit 65,7 Vol.-Teilen 40gew.-%iger Natriumnitritlösung bei 0 – 3° C diazotiert. Man läßt eine halbe Stunde mit leichtem Nitritüberschuß nachrühren, zerstört dann den Überschuß an salpetriger Säure mit Amidosulfonsäure und klärt eventuell mit Kieselgur.

71,5 Gew.-Teile α-Naphthylamin werden in eine 60° C warme Mischung von 1000 Vol.-Teilen Wasser und 115 Vol.-Teilen Vol.-Teilen 5 n-Salzsäure eingetragen und auf 80° C zur völligen Lösung erhitzt. Man gibt Eis und 250 Vol.-Teile Wasser so zu, daß die Temperatur auf 30 – 32° C fällt.

Die diazotierte m-Toludinlösung wird mit Eis versetzt und zu dieser Lösung läßt man die salzsaure α-Naphthylaminlösung so zulaufen, daß die Temperatur nicht über 2°C steigt. Sobald 1/3 der Naphthylaminlösung eingelaufen ist, gibt man eine Lösung von 130 Gew.-Teilen Natriumacetat in 500 Vol.-Teilen Wasser in der Weise zu, daß ihr Zulauf gleichzeitig mit dem der α-Naphthylaminlösung beendet ist.

Der ausgefallene Farbstoff wird abgesaugt und feucht in eine Mischung von 800 Vol.-Teilen Eisessig und 200 Vol.-Teilen 5 n-Salzsäure eingetragen. Man kühlt auf 2 – 3° C und diazotiert mit 140 Vol.-Teilen 40gew.-%iger Natriumnitritlösung, wobei der Farbstoff in Lösung geht.

Nach Beendigung der Nitritaufnahme (Überschuß mit Amidosulfonsäure zerstören) wird mit Kieselgur geklärt und die so erhaltene Diazolösung zu der Emulsion von 111,15 Gew.-Teilen N-Ethyl-N-(2-ethyl-hexyl)-m-toluidin in 3,1 Gew.-Teilen eines Emulgators (s. o.), 51,75 Vol.-Teilen Wasser und 55,2 Vol.-Teilen Salzsäure (19,5° Bé) zugegeben. Anschließend wird mit Sodalösung innerhalb von 1 – 2 Stunden bei 10 – 15°C der pH-Wert der Lösung auf 4 gestellt. Man gibt 1000 Vol.-Teile Xylol zu, verdünnt mit dem gleichen Volumen Wasser, trennt die wäßrige Phase ab, wäscht die organische Phase mit Wasser neutral und erhält aus der organischen Farbstofflösung nach Abdestillieren des Xylols 220 Gew.-Teile des Farbstoffs der Formel

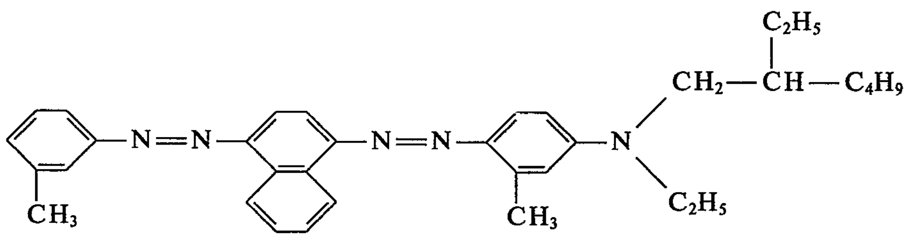

als rotes Öl, das sich zum Färben von Treibstoffen, Heizölen, Lacken, Wachsen und Fetten in blaustichig roten Farbtönen sehr gut eignet.

Die folgende Tabelle 1 zeigt weitere Diazofarbstoffe der Formel (I), die analog zu der in den vorstehenden Beispielen angeführten Arbeitsweisen erhalten werden können, und die Heizöl in den angegebenen Farbtönen färben.

Tabelle 1

| | $R_1$ | $R_2$ | $R_3$ | $R_4$ | $R_5$ | $R_6$ | Färbt Heizöl |
|---|---|---|---|---|---|---|---|
| 6 | H | o-$CH_3$ | H | $CH_3$ | $C_4H_9$ | $C_4H_9$ | blaustichig rot |
| 7 | H | p-$CH_3$ | H | $CH_3$ | $C_4H_9$ | $C_4H_9$ | blaustichig rot |
| 8 | $CH_3$*) | H | H | $CH_3$ | $C_2H_5$ | $C_4H_9$ | blaustichig rot |
| 9 | $CH_3$*) | $CH_3$*) | H | $CH_3$ | $C_2H_5$ | $C_4H_9$ | blaustichig rot |
| 10 | H | (techn.) $C_{12}H_{25}$ | H | $CH_3$ | $C_4H_9$ | $C_4H_9$ | blaustichig rot |
| 11 | H | H | H | H | $C_4H_9$ | $C_4H_9$ | blaustichig rot |
| 12 | H | H | H | H | 2-Ethylhexyl | $C_2H_5$ | blaustichig rot |
| 13 | H | H | $OCH_3$ | $CH_3$ | $C_4H_9$ | $C_4H_9$ | violett |
| 14 | H | H | H | $OC_2H_5$ | $C_4H_9$ | $C_4H_9$ | blaustichig rot |
| 15 | H | H | H | $NH-CO-CH_3$ | 2-Ethylhexyl | $C_4H_9$ | violett |
| 16 | H | H | H | $NH-CO-C_{17}H_{35}$ | $C_3H_7$ | $C_3H_7$ | violett |
| 17 | H | H | H | H | Stearyl | $C_2H_5$ | blaustichig rot |

*) Die $CH_3$-Gruppen sind in o-, m- und p-Stellung anzutreffen, da als Ausgangsprodukt technisches Toluidin bzw. Xylidin eingesetzt wurde.

Analog zu den in den Beispielen 1 bis 5 aufgeführten Arbeitsweisen sind auch folgende Farbstoffe erhältlich:

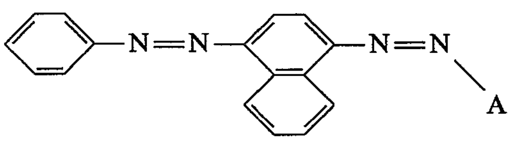

| | A | Färbt Heizöl |
|---|---|---|
| 18 | 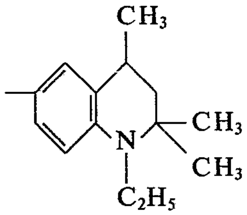 | blaustichig rot |
| 19 | 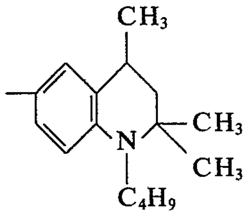 | blaustichig rot |
| 20 | 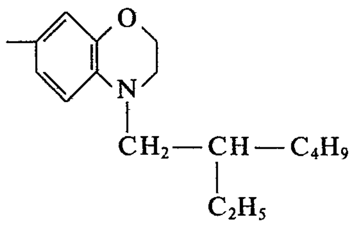 | violett |
| 21 | 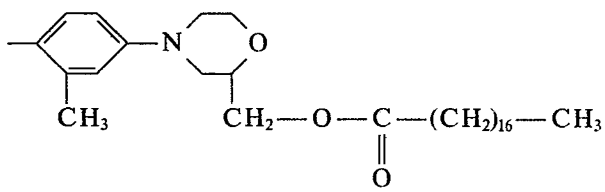 | rot |

Beispiel 22

13,4 Vol.-Teile Anilin werden in 57,5 Vol.-Teilen Wasser und 35,6 Vol.-Teilen Salzsäure (19,5° Bé) gelöst. Nach dem Abkühlen mit Eis auf 0° C wird mit 34 Vol.-Teilen 30vol.-%iger Natriumnitrit-Lösung bei 0 – 3° C diazotiert. Man zerstört noch vorhandenen Nitritüberschuß mit Amidosulfonsäure.

20,8 Gew.-Teile α-Naphthylamin werden in 300 Vol.-Teilen Wasser und 16 Vol.-Teilen Salzsäure (19,5° Bé) auf 80° C bis zu völligen Lösung erhitzt. Anschließend kühlt man durch Zugabe von Eis auf 0° C und gibt 250 Vol.-Teile Natriumacetatlösung (20vol.-%ig) hinzu.

Man läßt nun die diazotierte Anilinlösung zu dieser α-Naphthylaminsuspension bei 0 – 5° C langsam zulaufen.

Die erhaltene Suspension wird mit 65 Vol.-Teilen Salzsäure (19,5° Bé) angesäuert, mit Eis auf 3° C gebracht und mit 45 ml 30vol.-%iger Natriumnitritlösung diazotiert, wobei die Temperatur 5° C nicht übersteigen soll. Die Diazotierung dauert etwa 1 Stunde und der Farbstoff geht dabei in Lösung. Nach Beendigung der Diazotierung werden 6,5 Gew.-Teile Kieselgur zugesetzt, überschüssiges Nitrit mit Amidosulfonsäure zerstört und geklärt. Die so erhaltene Diazolösung gibt man zu der Lösung von 21,26 Gew.-Teilen N,N-Diethyl-m-toluidin in 15 Vol.-Teilen Wasser und 16 Vol.-Teilen Salzsäure (19,5° Bé). Anschließend wird mit Sodalösung (20vol.-%ig) bei 10 – 15° C innerhalb von 1 bis 1½ Stunden der pH-Wert der Lösung auf 4 gestellt wobei der Farbstoff ausfällt. Man rührt noch 2 – 3 Stunden bei 20° C, hält den pH-Wert mit Sodalösung (20vol.-%ig) bei 4, saugt dann ab und wäscht mit Wasser neutral. Der ausgefallene Farbstoff wird bei 50° C im Vakuumschrank getrocknet. Man erhält 52 Gew.-Teile des Disazofarbstoffs der Formel IV.

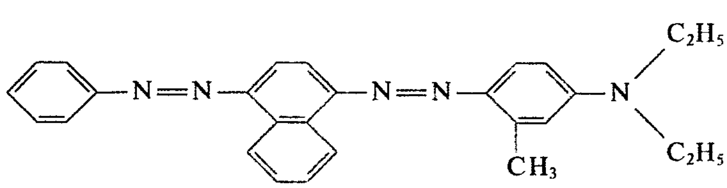

Beispiel 23

12,5 Gew.-Teile eines Farbstoffgemischs, bestehend aus 25 Gew.-Teilen des Farbstoffs der Formel

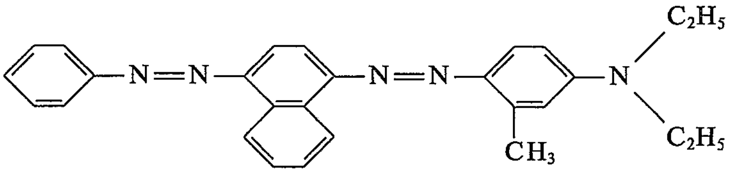

25 Gew.-Teilen des Farbstoffs der Formel

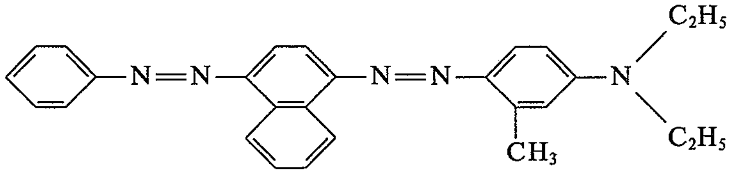

50 Gew.-Teilen des Farbstoffs der Formel

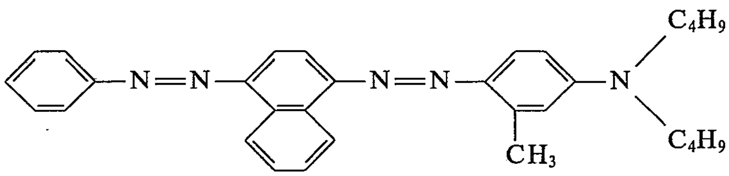

werden bei 20°C in 62,5 Gew.-Teilen eines handelsüblichen Aromatengemisches (technisches Dimethylnaphthalin) mit einem Siedebereich von oberhalb 200°C und 25 Gew.-Teilen Furfurol gelöst. Die Lösung wird gegebenenfalls von geringen Mengen unlöslicher Verunreinigungen durch Filtration befreit. Die Lösung bleibt bei −15°C unverändert.

Die obengenannte Lösung der Farbstoffmischung eignet sich zur Kennzeichnung von leichtem Heizöl. Dazu werden 40 g der Kennzeichnungslösung pro 1000 kg Heizöl verwendet.

Als weitere Beispiele zur Herstellung von Kennzeichnungslösungen seien die Farbstoffe der Beispiele 4−22 genannt, die gegebenenfalls einzeln oder als Mischungsbestandteile wie oben beschrieben, verwendet werden können und Heizöl in blaustichig roten bis rotstichig blauen Farbtönen anfärben.

Beispiel 24

13,5 Vol.-Teile Anilin werden in 57,5 Vol.-Teilen Wasser und 35,6 Vol.-Teilen Salzsäure (19,5° Bé) gelöst. Nach dem Abkühlen mit Eis auf 0°C wird mit 34,3 Vol.-Teilen 30vol.-%iger Natriumnitrit-Lösung bei 0−3°C diazotiert. Man zerstört noch vorhandenen Nitritüberschuß mit Amidosulfonsäure.

20,8 Gew.-Teile α-Naphthylamin werden in 300 Vol.-Teilen Wasser und 16 Vol.-Teilen Salzsäure (19,5° Bé) auf 80°C bis zur völligen Lösung erhitzt. Anschließend kühlt man durch Zugabe von Eis auf 0°C und gibt 250 Vol.-Teile Natriumacetatlösung (20vol.-%ig) hinzu.

Man läßt nun die diazotierte Anilinlösung zu dieser α-Naphthylaminsuspension bei 0−5°C langsam zulaufen.

Die erhaltene Suspension wird mit 65 Vol.-Teilen Salzsäure (19,5° Bé) angesäuert, mit Eis auf 3°C gebracht und mit 45 ml 30vol.-%iger Natriumnitritlösung diazotiert, wobei die Temperatur 5°C nicht übersteigen soll. Die Diazotierung dauert etwa 1 Stunde und der Farbstoff geht dabei in Lösung. Nach Beendigung der Diazotierung werden 6,5 Gew.-Teile Kieselgur zugesetzt, überschüssiges Nitrit mit Amidosulfonsäure zerstört und geklärt. Die so erhaltene Diazolösung gibt man zu der Emulsion einer Mischung von 14,88 Gew.-Teilen N,N-Diethyl- und 8,57 Gew.-Teilen N,N-Dibutyl-m-toluidin in 0,9 Gew.-Teilen eines Emulgators, bestehend aus einer Mischung von Natriumlaurylsulfat und mehrfach oxethyliertem Nonylphenol, 15 Vol.-Teilen Wasser und 16 Vol.-Teilen Salzsäure (19,5° Bé). Anschließend wird mit Sodalösung (20vol.-%ig) bei 10−15°C innerhalb von 1 bis 1 1/2 Stunden der pH-Wert der Lösung auf 4 gestellt, wobei der Farbstoff ausfällt. Man rührt noch 2−3 Stunden bei 20°C, hält den pH-Wert mit Sodalösung (20vol.-%ig) bei 4, saugt dann ab und wäscht mit Wasser neutral. Das ausgefallene Farbstoffgemisch wird bei 40°C im Vakuumschrank getrocknet. Das so erhaltene Farbstoffgemisch der Formeln

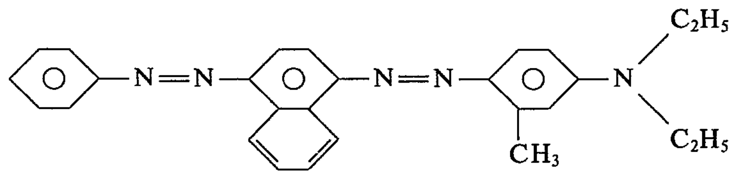

und

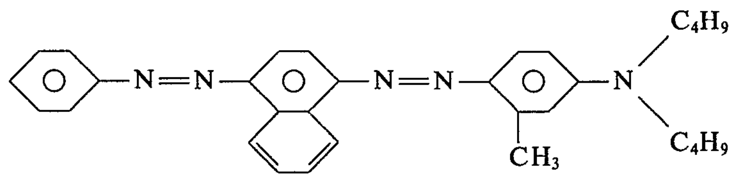

zeigt eine sehr gute Löslichkeit und eine kräftige, blaustichig rote Färbung in aromatischen und aliphatischen Kohlenwasserstoffen. Es eignet sich sehr gut zum Färben von Treibstoffen, Heizöl, Lacken und Wachsen.

Beispiel 25

13,5 Vol.Teile Anilin werden in 57,5 Vol.Teilen Wasser und 35,6 Vol.-Teilen Salzsäure (19,5° Bé) gelöst. Nach dem Abkühlen mit Eis auf 0° C wird mit 34,3 Vol.-Teilen 30vol.-%iger Natriumnitrit-Lösung bei 0 – 3° C diazotiert. Man zerstört noch vorhandenen Nitritüberschuß mit Amidosulfonsäure.

20,8 Gew.-Teile α-Naphthylamin werden in 300 Vol.-Teilen Wasser und 16 Vol.-Teilen Salzsäure (19,5° Bé) auf 80° C bis zur völligen Lösung erhitzt. Anschließend kühlt man durch Zugabe von Eis auf 0° C und gibt 250 Vol.-Teile Natriumacetatlösung (20vol.-%ig) hinzu.

Man läßt nun die diazotierte Anilinlösung zu dieser α-Naphthylaminsuspension bei 0 – 5° C langsam zulaufen.

Die erhaltene Suspension wird mit 65 Vol.-Teilen Salzsäure (19,5° Bé) angesäuert, mit Eis auf 3° C gebracht und mit 45 ml 30vol.-%iger Natriumnitritlösung diazotiert, wobei die Temperatur 5° C nicht übersteigen soll. Die Diazotierung dauert etwa 1 Stunde und der Farbstoff geht dabei in Lösung. Nach Beendigung der Diazotierung werden 6,5 Gew.-Teile Kieselgur zugesetzt, überschüssiges Nitrit mit Amidosulfonsäure zerstört und geklärt. Die so erhaltene Diazolösung gibt man zu der Emulsion einer Mischung von 16,54 Gew.-Teilen N,N-Diethyl-, 2,77 Gew.-Teilen N-Ethyl-N-butyl- und 3,17 Gew.-Teilen N,N-Dibutyl-m-toluidin in 0,9 Gew.-Teilen eines Emulgators (siehe unten *), 15 Vol.-Teilen Wasser und 16 Vol.-Teilen Salzsäure (19,5° Bé). Anschließend wird mit Sodalösung (20vol.-%ig) bei 10 – 15° C innerhalb von 1 bis 1 1/2 Stunden der pH-Wert der Lösung auf 4 gestellt, wobei der Farbstoff ausfällt. Man rührt noch 2 – 3 Stunden bei 20° C, hält den pH-Wert mit Sodalösung (20vol.-%ig) bei 4, saugt dann ab und wäscht mit Wasser neutral. Das ausgefallene Farbstoffgemisch wird bei 40 – 50° C im Vakuumschrank getrocknet. Das so erhaltene Farbstoffgemisch der Formeln

---

* Der verwendete Emulgator besteht aus einer Mischung von Na-Laurylsulfat und mehrfach oxethyliertem Nonylphenol.

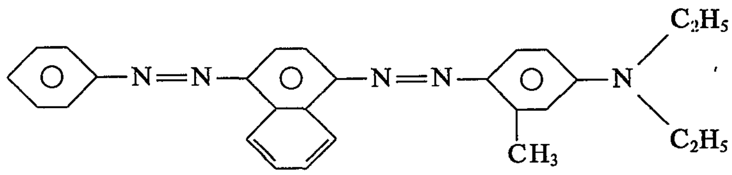

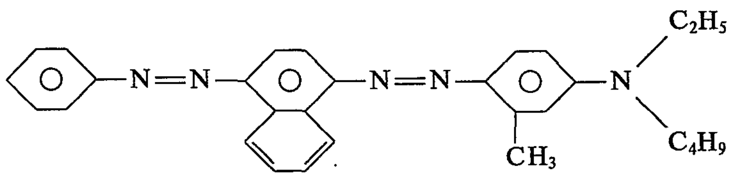

und

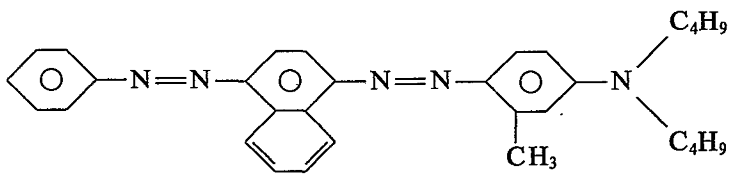

zeigt eine sehr gute Löslichkeit und eine kräftige, blaustichig rote Färbung in aromatischen und aliphatischen Kohlenwasserstoffen. Es eignet sich sehr gut zum Färben von Treibstoffen, Heizölen, Lacken und Wachsen.

**Patentansprüche**

1. Disazofarbstoffe der Formel

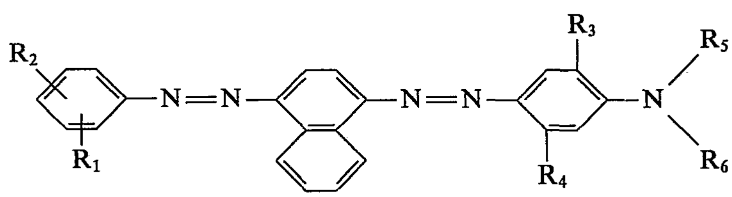 (I)

in der

| | |
|---|---|
| $R_1$, $R_2$ | für Wasserstoff, Alkyl, Alkenyl, Aryl, Aralkyl, Alkoxy, Cycloalkyl, |
| $R_3$ | für Wasserstoff, Alkyl, Alkoxy, |
| $R_4$ | für Wasserstoff, Alkyl, Alkoxy, Acylamino, Alkylaminocarbonylamino, Alkoxycarbonylamino, |
| $R_5$ | für Alkoxyalkyl, Alkyl, Alkenyl, Cycloalkyl, Acyloxyalkyl, Aralkyl und |
| $R_6$ | für $C_3-C_{18}$-Alkyl, Alkenyl, Alkoxyalkyl, Acyloxyalkyl, Cycloalkyl, Aralkyl stehen und |
| $R_3$, $R_5$ | zusammen einen divalenten Rest der Formeln |

$$-\overset{*}{C}H_2-CH_2-O-$$

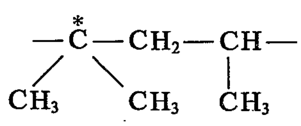

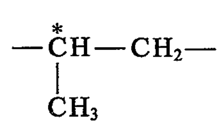

oder $-CH_2-CH_2-CH_2$

bilden können, in dem das mit * bezeichnete C-Atom an das N-Atom gebunden ist, und

$R_5$, $R_6$ weiterhin unter Einschluß des N-Atoms, an das sie gebunden sind, einen gesättigten Heterocyclus, der weitere Heteroatome enthalten kann, bilden können.

2. Disazofarbstoffe gemäß Anspruch 1, bei denen

$R_1$, $R_2$ für Wasserstoff, $C_1-C_{18}$-Alkyl, $C_2-C_{18}$-Alkenyl, Phenyl, Naphthyl, Phenyl-$C_1-C_4$-alkyl, Naphthyl-$C_1-C_4$-Alkyl, $C_1-C_{18}$-Alkoxy, $C_3-C_{10}$-Cycloalkyl,

$R_3$ für Wasserstoff, $C_1-C_{18}$-Alkyl, $C_1-C_{18}$-Alkoxy,

$R_4$ für Wasserstoff, $C_1-C_{18}$-Alkyl, $C_1-C_{18}$-Alkoxy, durch $C_1-C_{18}$-Alkylcarbonyl substituiertes Amino, durch $C_1-C_{18}$-Alkylcarbonyl und $C_1-C_{18}$-Alkyl substituiertes Amino, einen Rest

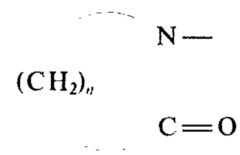

wobei n 3 oder 4 bedeutet oder einen Rest

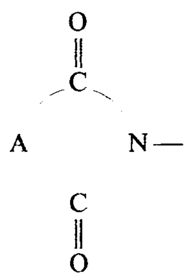

wobei A für

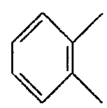

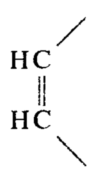 oder 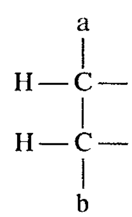

mit der Bedeutung Wasserstoff oder $C_1-C_6$-Alkyl für a und b, $C_1-C_{18}$-Alkylaminocarbonylamino, $C_1-C_{18}$-Alkoxy-carbonylamino,

$R_5$ für $C_1-C_{18}$-Alkoxy-$C_1-C_{18}$-alkyl, $C_1-C_{18}$-Alkyl, $C_2-C_{18}$-Alkenyl, $C_3-C_{10}$-Cycloalkyl, $C_1-C_{18}$-Alkylcarbonyloxy-$C_1-C_{18}$-alkyl, Phenyl-$C_1-C_4$-alkyl, Naphthyl-$C_1-C_4$-alkyl,

$R_6$ für $C_3-C_{18}$-Alkyl, $C_2-C_{18}$-Alkenyl, $C_1-C_{18}$-Alkoxy-$C_1-C_{18}$-alkyl, $C_1-C_{18}$-Alkyl-carbonyloxy-$C_1-C_{18}$-alkyl, $C_3-C_{10}$-Cycloalkyl, Phenyl-$C_1-C_4$-alkyl, Naphthyl-$C_1-C_4$-alkyl und

$R_5$ und $R_6$ unter Einschluß des N-Atoms, an das sie gebunden sind ein Morpholin-, Piperidin-, Pyrrolidin- oder Piperazin-System bilden.

3. Farbstoffe gemäß den Ansprüchen 1 und 2, bei denen $R_1$ und/oder $R_2$ Wasserstoff bedeuten.

4. Farbstoffe der Formel

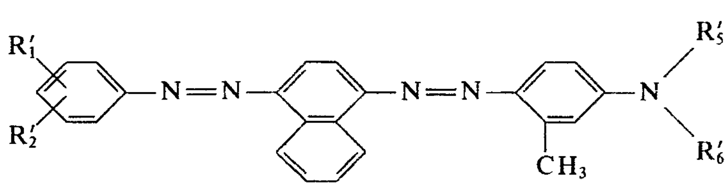

(II)

in der

$R_1'$, $R_2'$ Wasserstoff, Methyl, Cyclohexyl, tert.-Butyl,
$R_5'$ Ethyl, Propyl, Butyl und
$R_6'$ Butyl bedeuten.

5. Farbstoffe gemäß Anspruch 4, bei denen $R_1'$ und/oder $R_2'$ Wasserstoff bedeuten.

6. Verfahren zum Färben und/oder Kennzeichnen von organischen Materialien, insbesondere Mineralölprodukte, dadurch gekennzeichnet, daß man eine Verbindung oder Gemische von Verbindungen der Formel

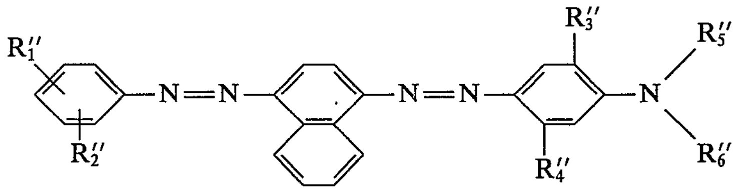 (III)

verwendet, in der

$R_1''$, $R_2''$ Wasserstoff, Alkyl, Alkenyl, Aryl, Aralkyl, Alkoxy, Cycloalkyl,
$R_3''$ Wasserstoff, Alkyl, Alkoxy,
$R_4''$ Wasserstoff, Alkyl, Alkoxy, Acylamino, Alkylaminocarbonylamino, Alkoxycarbonylamino und
$R_5''$, $R_6''$ Wasserstoff, Alkyl, Alkenyl, Cycloalkyl, Aralkyl, Alkoxyalkyl, Acyloxyalkyl bedeuten, und
$R_3''$, $R_5''$ zusammen einen divalenten Rest der Formeln

$$-\overset{*}{C}H_2-CH_2-O-$$

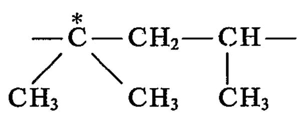

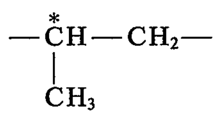

oder

$$-CH_2-CH_2-CH_2$$

bilden können, in dem das mit * bezeichnete C-Atom an das N-Atom gebunden ist und
$R_5''$, $R_6''$ weiterhin unter Einschluß des N-Atoms, an das sie gebunden sind, einen gesättigten Heterocyclus, der weitere Heteroatome enthalten kann, bilden können.

7. Verfahren gemäß Anspruch 6, dadurch gekennzeichnet, daß man Farbstoffe oder Gemische von Farbstoffen verwendet, bei denen

$R_1''$, $R_2''$ für Wasserstoff, $C_1-C_{18}$-Alkyl, $C_2-C_{18}$-Alkenyl, Phenyl, Naphthyl, Phenyl-$C_1-C_4$-alkyl, Naphthyl-$C_1-C_4$-alkyl, $C_1-C_{18}$-Alkoxy, $C_3-C_{10}$-Cycloalkyl,
$R_3''$ für Wasserstoff, $C_1-C_{18}$-Alkyl, $C_1-C_{18}$-Alkoxy,
$R_4''$ für Wasserstoff, $C_1-C_{18}$-Alkyl, $C_1-C_{18}$-Alkoxy, durch $C_1-C_{18}$-Alkylcarbonyl substituiertes Amino, durch $C_1-C_{18}$-Alkylcarbonyl und $C_1-C_{18}$-Alkyl substituiertes Amino, einen Rest

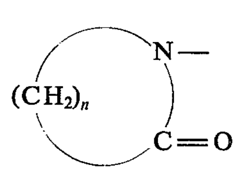

wobei n 3 oder 4 bedeutet oder einen Rest

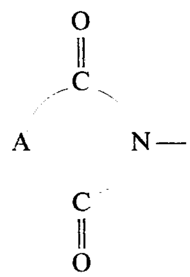

wobei A für

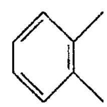

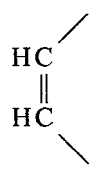

oder

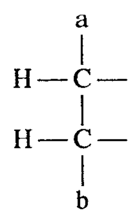

mit der Bedeutung Wasserstoff oder $C_1-C_6$-Alkyl für a und b, $C_1-C_{18}$-Alkylamino-carbonylamino, $C_1-C_{18}$-Alkoxy-carbonylamino,

$R_5''$, $R_6''$ für Wasserstoff, $C_1-C_{18}$-Alkyl, $C_2-C_{18}$-Alkenyl, $C_3-C_{10}$-Cycloalkyl, Phenyl-$C_1-C_4$-alkyl, Naphthyl-$C_1-C_4$-alkyl, $C_1-C_{18}$-Alkoxy-$C_1-C_{18}$-alkyl, $C_1-C_{18}$-Alkyl-carbonyloxy-$C_1-C_{18}$-alkyl stehen und

$R_5''$, $R_6''$ unter Einschluß des N-Atoms, an das sie gebunden sind ein Morpholin-, Piperidin-, Pyrrolidin- oder Piperazin-System bilden können.

8. Verfahren gemäß den Ansprüchen 6 und 7, dadurch gekennzeichnet, daß man Farbstoffe oder Gemische von Farbstoffen verwendet, bei denen $R_1''$ und/oder $R_2''$ Wasserstoff sind.

9. Verfahren gemäß Anspruch 6, dadurch gekennzeichnet, daß man einen Farbstoff oder Gemische von Farbstoffen der Formel

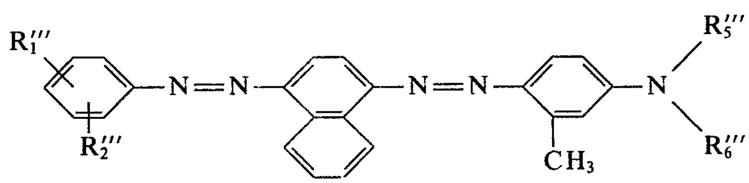

(IV)

in der

$R_1'''$, $R_2'''$ Wasserstoff, Methyl, Cyclohexyl, tert.-Butyl,
$R_5'''$ Methyl, Ethyl, Propyl, Butyl und
$R_6'''$ Methyl, Ethyl, Propyl, Butyl

bezeichnen, verwendet.

10. Verfahren gemäß Anspruch 9, dadurch gekennzeichnet, daß man einen Farbstoff oder Gemische von Farbstoffen verwendet, bei denen $R_1'''$ und $R_2'''$ Wasserstoff bedeuten.

11. Verfahren zum Färben und/oder Kennzeichnen von organischen Materialien, insbesondere Mineralölprodukte, dadurch gekennzeichnet, daß man Zweier- oder Dreiergemische von Farbstoffen der Formeln

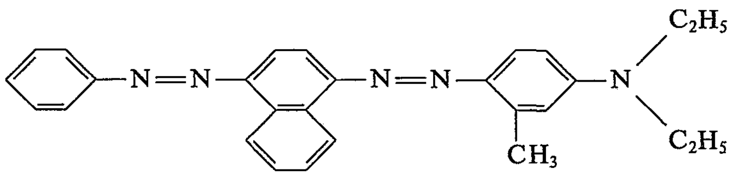
(V)

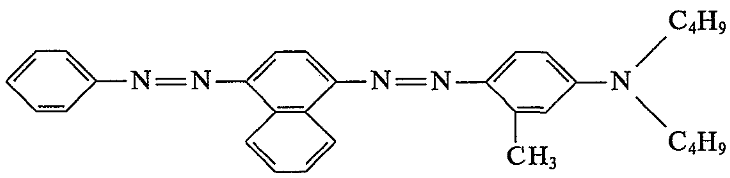
(VI)

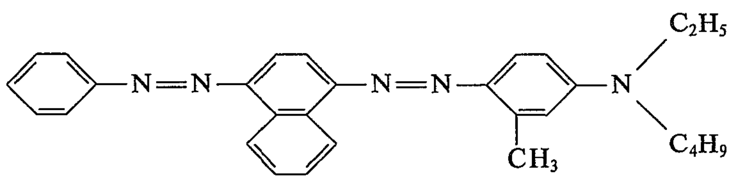
(VII)

verwendet.

12. Verfahren zur Herstellung von Zweier- oder Dreiergemischen der Farbstoffe (V), (VI) und (VII) in fester Form, dadurch gekennzeichnet, daß man Anilin auf $\alpha$-Naphthylamin kuppelt und das entstandene Kupplungsprodukt mit einem entsprechenden Gemisch der Kupplungskomponente

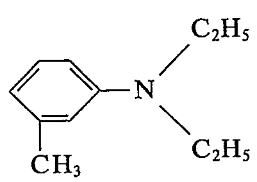

und/oder

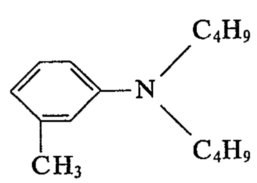

und/oder

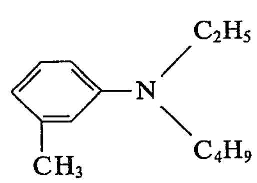

vereinigt.

**Claims**

1. Disazo dyestuffs of the formula

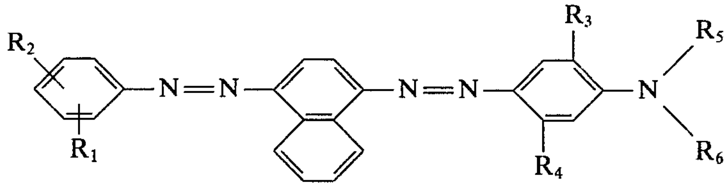

(I)

in which

$R_1$ and $R_2$ represent hydrogen, alkyl, alkenyl, aryl, aralkyl, alkoxy or cycloalkyl,

$R_3$ represents hydrogen, alkyl or alkoxy,

$R_4$ represents hydrogen, alkyl, alkoxy, acylamino, alkylaminocarbonylamino or alkoxycarbonylamino,

$R_5$ represents alkoxyalkyl, alkyl, alkenyl, cycloalkyl, acyloxyalkyl or aralkyl and

$R_6$ represents $C_3-C_{18}$-alkyl, alkenyl, alkoxyalkyl, acyloxyalkyl, cycloalkyl or aralkyl, and

$R_3$ and $R_5$ together can form a divalent radical of the formulae

$$-\overset{*}{C}H_2-CH_2-O-$$

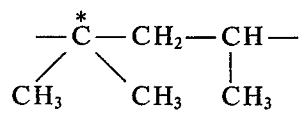

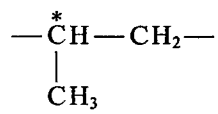

or

$$-CH_2-CH_2-CH_2$$

in which the C atom designated * is bonded to the N atom, and

$R_5$ and $R_6$ furthermore, with the inclusion of the N atom to which they are bonded, can form a saturated heterocyclic structure which can contain further hetero-atoms.

2. Disazo dyestuffs according to Claim 1, in which

$R_1$ and $R_2$ represent hydrogen, $C_1-C_{18}$-alkyl, $C_2-C_{18}$-alkenyl, phenyl, naphthyl, phenyl-$C_1-C_4$-alkyl, naphthyl-$C_1-C_4$-alkyl, $C_1-C_{18}$-alkoxy or $C_3-C_{10}$-cycloalkyl,

$R_3$ represents hydrogen, $C_1-C_{18}$-alkyl or $C_1-C_{18}$-alkoxy,

$R_4$ represents hydrogen, $C_1-C_{18}$-alkyl, $C_1-C_{18}$-alkoxy, amino substituted by $C_1-C_{18}$-alkylcarbonyl, amino substituted by $C_1-C_{18}$-alkylcarbonyl and $C_1-C_{18}$-alkyl, a radical

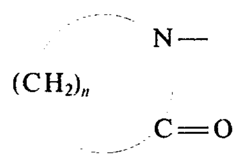

in which n denotes 3 or 4 or a radical

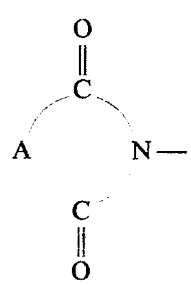

in which A represents

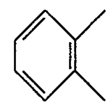

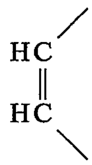

or

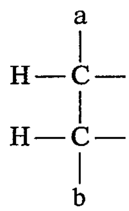

in which a and b denote hydrogen or $C_1-C_6$-alkyl, or $C_1-C_{18}$-alkylaminocarbonylamino or $C_1-C_{18}$-alkoxycarbonylamino,

$R_5$ represents $C_1-C_{18}$-alkoxy-$C_1-C_{18}$-alkyl, $C_1-C_{18}$-alkyl, $C_2-C_{18}$-alkenyl, $C_3-C_{10}$-cycloalkyl, $C_1-C_{18}$-alkylcarbonyloxy-$C_1-C_{18}$-alkyl, phenyl-$C_1-C_4$-alkyl or naphthyl-$C_1-C_4$-alkyl and

$R_6$ represents $C_3-C_{18}$-alkyl, $C_2-C_{18}$-alkenyl, $C_1-C_{18}$-alkoxy-$C_1-C_{18}$-alkyl, $C_1-C_{18}$-alkylcarbonyloxy-$C_1-C_{18}$-alkyl, $C_3-C_{10}$-cycloalkyl, phenyl-$C_1-C_4$-alkyl or naphthyl-$C_1-C_4$-alkyl and

$R_5$ and $R_6$, with the inclusion ot the N atom to which they are bonded, form a morpholine, piperidine, pyrrolidine or piperazine system.

3. Dyestuffs according to Claims 1 and 2, in which $R_1$ and/or $R_2$ denote hydrogen.

4. Dyestuffs of the formula

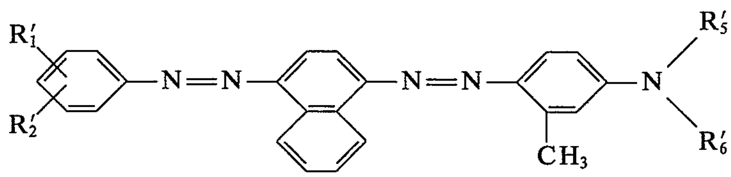

(II)

in which

$R_1'$ and $R_2'$ denote hydrogen, methyl, cyclohexyl or tert.-butyl,

$R_5'$ denotes ethyl, propyl or butyl and

$R_6'$ denotes butyl.

5. Dyestuffs according to Claim 4, in which $R_1'$ and/or $R_2'$ denote hydrogen.

6. Process for dyeing and/or characterising organic materials, especially mineral oil products, characterised in that a compound or mixtures of compounds of the formula

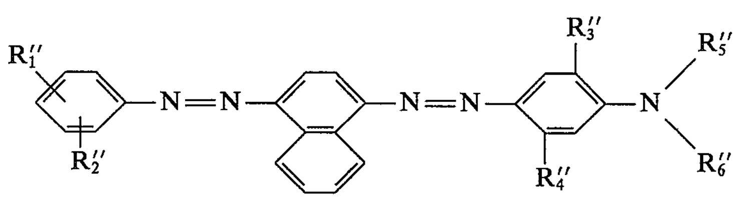

(III)

in which

$R_1''$ and $R_2''$ denote hydrogen, alkyl, alkenyl, aryl, aralkyl, alkoxy or cycloalkyl,

$R_3''$ denotes hydrogen, alkyl or alkoxy,

$R_4''$ denotes hydrogen, alkyl, alkoxy, acylamino, alkylaminocarbonylamino or alkoxycarbonylamino and

$R_5''$ and $R_6''$ denote hydrogen, alkyl, alkenyl, cycloalkyl, aralkyl, alkoxyalkyl or acyloxyalkyl, and

$R_3''$ and $R_5''$ together can form a divalent radical of the formulae

$-\overset{*}{C}H_2-CH_2-O-$

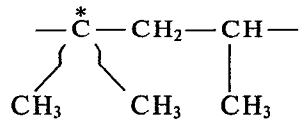

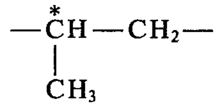

or

$-CH_2-CH_2-CH_2$

in which the C atom designated * is bonded to the N atom, and

R₅'' and R₆'' furthermore, with the inclusion of the N atom to which they are bonded, can form a saturated heterocyclic structure, which can contain further hetero-atoms,

are used.

7. Process according to Claim 6, characterised in that dyestuffs or mixtures of dyestuffs in which

$R_1''$ and $R_2''$ represent hydrogen, $C_1-C_{18}$-alkyl, $C_2-C_{18}$-alkenyl, Phenyl, naphthyl, phenyl-$C_1-C_4$-alkyl, naphthyl-$C_1-C_4$-alkyl, $C_1-C_{18}$-alkoxy or $C_3-C_{10}$-cycloalkyl,

$R_3''$ represents hydrogen, $C_1-C_{18}$-alkyl or $C_1-C_{18}$-alkoxy,

$R_4''$ represents hydrogen, $C_1-C_{18}$-alkyl, $C_1-C_{18}$-alkoxy, amino substituted by $C_1-C_{18}$-alkylcarbonyl, amino substituted by $C_1-C_{18}$-alkylcarbonyl and $C_1-C_{18}$-alkyl, a radical

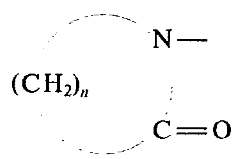

in which n aenotes 3 or 4, or a radical

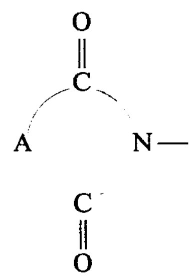

in which A represents

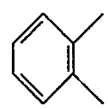

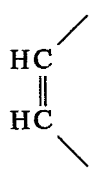

or

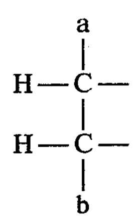

in which a and b represent hydrogen or $C_1-C_6$-alkyl, $C_1-C_{18}$-alkylaminocarbonylamino or $C_1-C_{18}$-alkoxycarbonylamino and

$R_5''$ and $R_6''$ represent hydrogen, $C_1-C_{18}$-alkyl, $C_2-C_{18}$-alkenyl, $C_3-C_{10}$-cycloalkyl, phenyl-$C_1-C_4$-alkyl, naphthyl-$C_1-C_4$-alkyl, $C_1-C_{18}$-alkoxy-$C_1-C_{18}$-alkyl or $C_1-C_{18}$-alkyl-carbonyloxy-$C_1-C_{18}$-alkyl and

$R_5''$ and $R_6''$ with the inclusion of the N atom to which they are bonded, can form a morpholine, piperidine, pyrrolidine or piperazine system,

are used.

8. Process according to Claim 6 and 7, characterised in that dyestuffs or mixtures of dyestuffs in which $R_1''$ and/or $R_2''$ are hydrogen, are used.

9. Process according to Claim 6, characterised in that a dyestuff or mixtures of dyestuffs of the formula

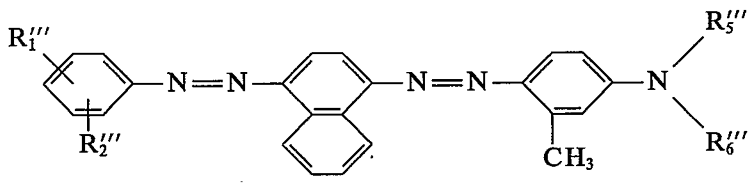

(IV)

in which

$R_1'''$ and $R_2'''$ represent hydrogen, methyl, cyclohexyl or tert.-butyl,
$R_5'''$ represents methyl, ethyl, propyl or butyl and
$R_6'''$ represents methyl, ethyl, propyl or butyl,

are used.

10. Process according to Claim 9, characterised in that a dyestuff or mixtures of dyestuffs in which $R_1'''$ and $R_2'''$ denote hydrogen, are used.

11. Process for dyeing and/or characterising organic materials, especially mineral oil products, characterised in that mixtures of two or three of the dyestuffs of the formulae

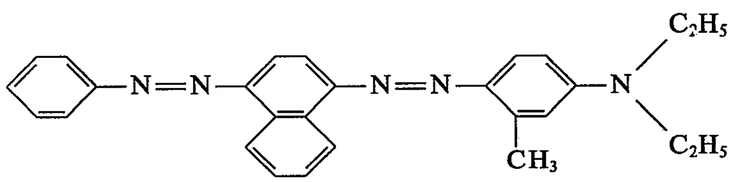

(V)

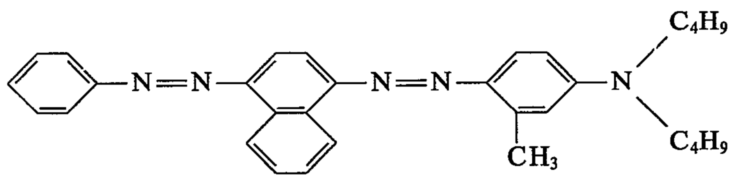

(VI)

and

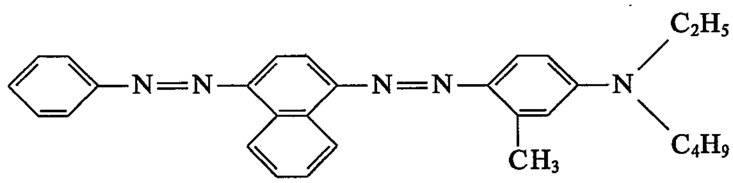

(VII)

are used.

12. Process for the preparation of mixtures of two or three of the dyestuffs (V), (VI) and (VII) in the solid form, characterised in that aniline is coupled with $\alpha$-naphthylamine and the resulting coupling product is combined with a corresponding mixture of the coupling components

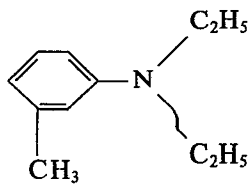

and/or

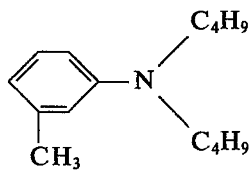

and/or

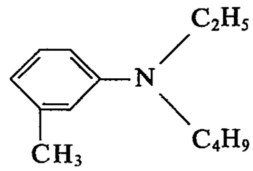

## Revendications

1. Colorants disazoïques de formule:

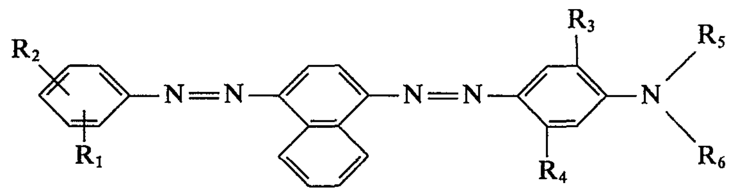

(I)

dans laquelle

| | |
|---|---|
| $R_1$, $R_2$ | représentent de l'hydrogène, alcoyle, alcényle, aryle, aralcoyle, alcoxy, cycloalcoyle, |
| $R_3$ | de l'hydrogène, alcoyle, alcoxy, |
| $R_4$ | de l'hydrogène, alcoyle, alcoxy, acylamino, alcoylaminocarbonylamino, alcoxycarbonylamino, |
| $R_5$ | alcoxyalcoyle, alcoyle, alcényle, cycloalcoyle, acyloxyalcoyle, aralcoyle et |
| $R_6$ | alcoyle en $C_3-C_{18}$, alcényle, alcoxyalcoyle, acyloxyalcoyle, cycloalcoyle, aralcoyle, et |
| $R_3$, $R_5$ | peuvent former ensemble un radical bivalent de formules: |

$$-\overset{*}{C}H_2-CH_2-O-$$

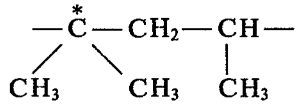

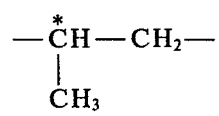

ou

$$-CH_2-CH_2-CH_2$$

dans lequel l'atome de carbone marqué du signe * est lié à l'atome N, et

| | |
|---|---|
| $R_5$, $R_6$ | en outre, avec l'inclusion de l'atome N auquel ils sont reliés, peuvent former un hétérocycle saturé qui peut contenir d'autres hétéroatomes. |

2. Colorants disazoïques selon la revendication 1, dans lesquels

$R_1$, $R_2$ représentent de l'hydrogène, alcoyle en $C_1-C_{18}$, alcényle en $C_2-C_{18}$, phényle, naphtyle, phénylalcoyle($C_1-C_4$), naphtylalcoyle ($C_1-C_4$), alcoxy($C_1-C_{18}$), cycloalcoyle ($C_3-C_{10}$),

$R_3$ de l'hydrogène, alcoyle en $C_1-C_{18}$, alcoxy en $C_1-C_{18}$,

$R_4$ de l'hydrogène, alcoyle en $C_1-C_{18}$, alcoxy en $C_1-C_{18}$, amino substitué par un alcoyl-($C_1-C_{18}$)carbonyle, amino substitué par un alcoyl($C_1-C_{18}$)-carbonyle et un alcoyle-($C_1-C_{18}$), un radical

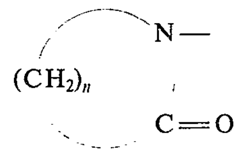

où n signifie 3 ou 4, ou un radical

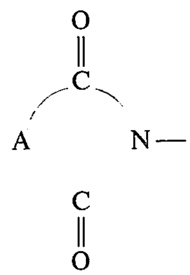

où A représente

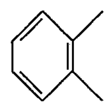

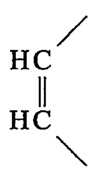

ou

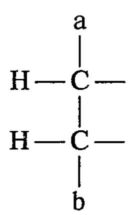

avec la signification d'hydrogène ou d'alcoyle en $C_1-C_6$ pour a et b, alcoyl($C_1-C_{18}$)-aminocarbonylamino, alcoxy($C_1-C_{18}$)carbonylamino,

$R_5$ représente un alcoxy($C_1-C_{18}$)alcoyle($C_1-C_{18}$), alcoyle($C_1-C_{18}$), alcényle($C_2-C_{18}$), cycloalcoyle($C_3-C_{10}$), alcoyle($C_1-C_{18}$)carbonyloxyalcoyle($C_1-C_{18}$), phénylalcoyle($C_1-C_4$), naphtylalcoyle($C_1-C_4$),

$R_6$ alcoyle($C_3-C_{18}$), alcényle($C_2-C_{18}$), alcoxy($C_1-C_{18}$)alcoyle($C_1-C_{18}$), alcoyl($C_1-C_{18}$)-carbonyloxyalcoyle($C_1-C_{18}$), cycloalcoyle($C_3-C_{10}$), phénylalcoyle($C_1-C_4$), naphtylalcoyle($C_1-C_4$),

$R_5$ et $R_6$, avec l'inclusion de l'atome N auquel ils sont attachés, forment un système morpholine, pipéridine, pyrrolidine ou pipérazine.

3. Colorants selon les revendications 1 et 2, dans lesquels $R_1$ et/ou $R_2$ représentent de l'hydrogène.

4. Colorants de formule

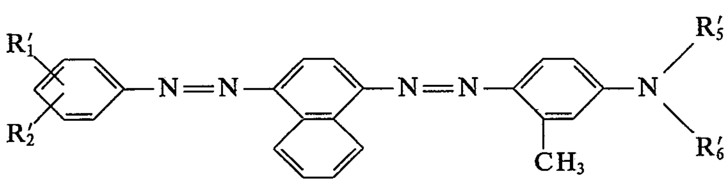

(II)

dans laquelle

| | |
|---|---|
| $R_1'$, $R_2'$ | représentent de l'hydrogène, méthyle, cyhexyle, t-butyle, |
| $R_5$ | éthyle, propyle, butyle et |
| $R_6'$ | butyle. |

5. Colorants selon la revendication 4, dans lesquels $R_1'$ et/ou représentent de l'hydrogène.

6. Procédé de teinture et/ou de marquage de matières organiques, en particulier de produits d'huile minérale, caractérisé en ce qu'on utilise un composé ou des mélanges de composés de formule:

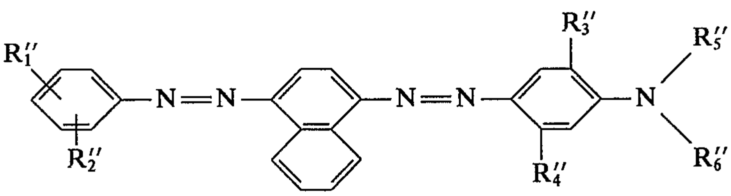

(III)

dans laquelle

| | |
|---|---|
| $R_1''$, $R_2''$ | représentent de l'hydrogène, alcoyle, alcényle, aryle, aroalcoyle, alcoxy, cycloalcoyle, |
| $R_3''$ | de l'hydrogène, alcoyle, alcoxy, |
| $R_4''$ | de l'hydrogène, alcoyle, alcoxy, acylamino, alcoylaminocarbonylamino, alcoxycarbonylamino et |
| $R_5''$, $R_6''$ | de l'hydrogène, alcoyle, alcényle, cycloalcoyle, aralcoyle, alcoxyalcoyle, acyloxyalcoyle, et |
| $R_3''$, $R_5''$ | peuvent former ensemble un radical bivalent de formules: |

$$-\overset{*}{C}H_2-CH_2-O-$$

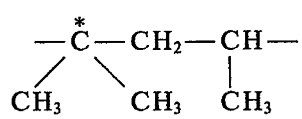

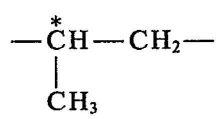

ou

$$-CH_2-CH_2-CH_2$$

dans lequel l'atome de carbone marqué du signe * est lié à l'atome N, et

$R_5''$, $R_6''$ en outre, avec l'inclusion de l'atome N auquel ils sont attachés, peuvent former un hétérocycle saturé qui peut contenir d'autres hétéroatomes.

7. Procédé selon la revendication 6, caractérisé en ce qu'on utilise des colorants ou des mélanges de colorants dans lesquels

| | |
|---|---|
| $R_1''$, $R_2''$ | représentent de l'hydrogène, alcoyle($C_1-C_{18}$), alcényle($C_2-C_{18}$), phényle, naphtyle, phénylalcoyl($C_1-C_4$), naphtylalcoyle($C_1-C_4$), alcoxy($C_1-C_{18}$), cycloalcoyle($C_3-C_{10}$), |
| $R_3''$ | de l'hydrogène, alcoyle($C_1-C_{18}$), alcoxy($C_1-C_{18}$), |
| $R_4''$ | de l'hydrogène, alcoyle($C_1-C_{18}$), alcoxy($C_1-C_{18}$), amino substitué par un alcoyl($C_1-C_{18}$)-carbonyle et un alcoyle($C_1-C_{18}$), un radical |

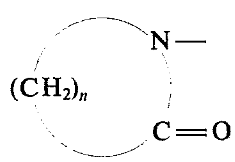

où n représente 3 ou 4 un radical

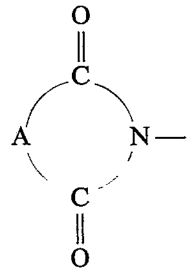

où A représente

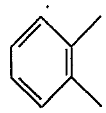

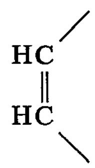 ou 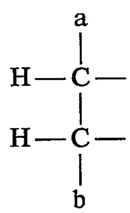

avec la signification hydrogène ou alcoyle($C_1-C_6$) pour a et b, alcoyl($C_1-C_{18}$)-amino-carbonylamino, alcoxy($C_1-C_{18}$)alcoxycarbonylamino,

$R_5''$, $R_6''$ représentent de l'hydrogène, alcoyle($C_1-C_{18}$), alcényle($C_2-C_{18}$), cycloalcoyle($C_3-C_{10}$), phénylalcoyle($C_1-C_4$), naphtylalcoyle($C_1-C_4$), alcoxy($C_1-C_{18}$)alcoyle($C_1-C_{18}$), alcoyle-($C_1-C_{18}$)carbonyloxyalcoyle($C_1-C_{18}$), et

$R_5''$, $R_6''$, avec l'inclusion de l'atome N auquel ils sont attachés, peuvent former un système morpholine, pipéridine, pyrrolidine ou pipérazine.

8. Procédé selon les revendications 6 et 7, caractérisé en ce qu'on utilise des colorants ou des mélanges de colorants dans lesquels $R_1''$ et/ou $R_2''$ sont de l'hydrogène.

9. Procédé selon la revendication 6, caractérisé en ce qu'on utilise un colorant ou des mélanges de colorants de formule:

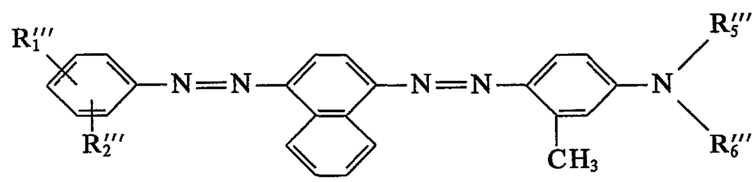

(IV)

dans laquelle

$R_1'''$, $R_2'''$ désignent de l'hydrogène, méthyle, cyclohexyle, t-butyle,
$R_5'''$ méthyle, éthyle, propyle, butyle et
$R_6'''$ méthyle, éthyle, propyle, butyle.

10. Procédé selon la revendications 9, caractérisé en ce qu'on utilise un colorant ou des mélanges de colorants dans lesquels $R_1'''$ et $R_2'''$ signifient de l'hydrogène.

11. Procédé de teinture et/ou de marquage de matières organiques, en particulier de produits d'huile minérale, caractérisé en ce qu'on utilise des mélanges binaires ou ternaires de colorants de formules:

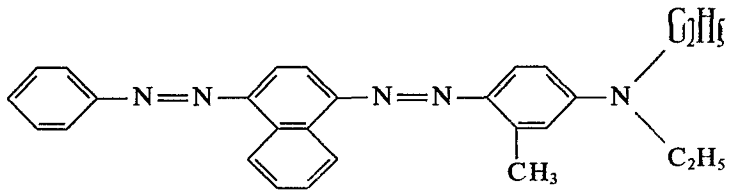

(V)

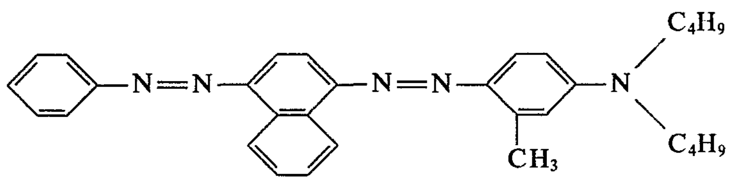

(VI)

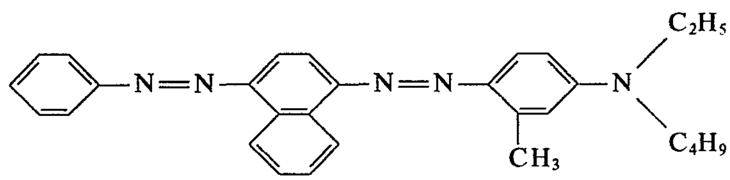

(VII)

12. Procédé de fabrication de mélange binaires ou ternaires des colorants (V), (VI) et (VII) sous une forme solide, caractérisé en ce qu'on copule de l'aniline sur de l'$\alpha$-naphtylamine et en ce qu'on réunit le produit de copulation obtenu avec un mélange correspondant des composants de copulation

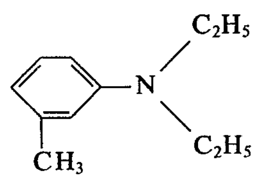

et/ou

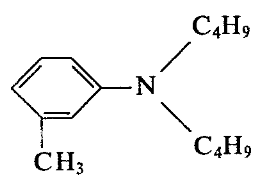

et/ou